# EUROPEAN PATENT APPLICATION

(11) **EP 2 420 935 A1**
(43) Date of publication of application: **22.02.2012**
(21) Application number: 10764282.9
(22) Date of filing: 15.04.2010
(51) Int. Cl.: G06F 13/38, G06F 13/00, H04L 1/00

(54) **TLP PROCESSING CIRCUIT FOR PCI EXPRESS AND RELAY DEVICE EQUIPPED WITH THE SAME**

(30) Priority: 17.04.2009 JP 2009100756
(71) Applicant: Kabushiki Kaisha Toshiba, Minato-ku Tokyo 105-8001 (JP)
(72) Inventor: MURAKAMI, Masayuki, Minato-ku, Tokyo (JP); TAKEHARA, Jun, Minato-ku, Tokyo (JP); ARAMAKI, Naruhiko, Minato-ku, Tokyo (JP); KAWAMURA, Toshikazu, Minato-ku, Tokyo (JP); TAKAYANAGI, Yoicho, Minato-ku, Tokyo (JP); OKABE, Motohiko, Minato-ku, Tokyo (JP)
(74) Representative: HOFFMANN EITLE
(86) International application number: PCT/JP2010/002757
(87) International publication number: WO 2010/119695

(57) **Abstract**

A PCI Express TLP processing circuit (10) comprises: a plurality of reception processing sections (2a1); a transmission processing section (2b); and a multiplexer (2c1) that performs transmission to the transmission processing section, selecting one of the reception processing sections; and at least a reception processing section comprises: a redundancy code generating circuit (12); an LCRC/sequential number detection circuit (13); a buffer memory (14); a packet control circuit section (16) that controls transmission for normal transmission to the transmission destination of the TLP in question or for nullifying transmission; and the transmission processing section comprises: a sequential number generating circuit (19); an LCRC generating circuit (20) and a relay circuit error detection circuit (21), whereby data integrity of the transmitted TLP can be guaranteed.

## Description

### [Technical field]

The present invention relates to a PCI Express device and in particular to a processing circuit of transaction layer packets (TLP).

### [Background art]

A PCI Express (registered trademark) bus is a high-speed serial interface employing point-to-point connection that has been developed in recent years for transferring data in computer systems and other electronic devices; the occupied area of the substrate of the bus is less than in the case of conventional parallel transfer, making possible further miniaturisation, and application of this technique in many fields is being studied.

The details of the standard have been laid down as the PCI Express Base Specification by the PCI-SIG (Peripheral Component Interconnect-Special Interest Group), which is the controlling body for the PCI standard, and documents explaining this standard have also been published (for example Non-patent Reference 1).

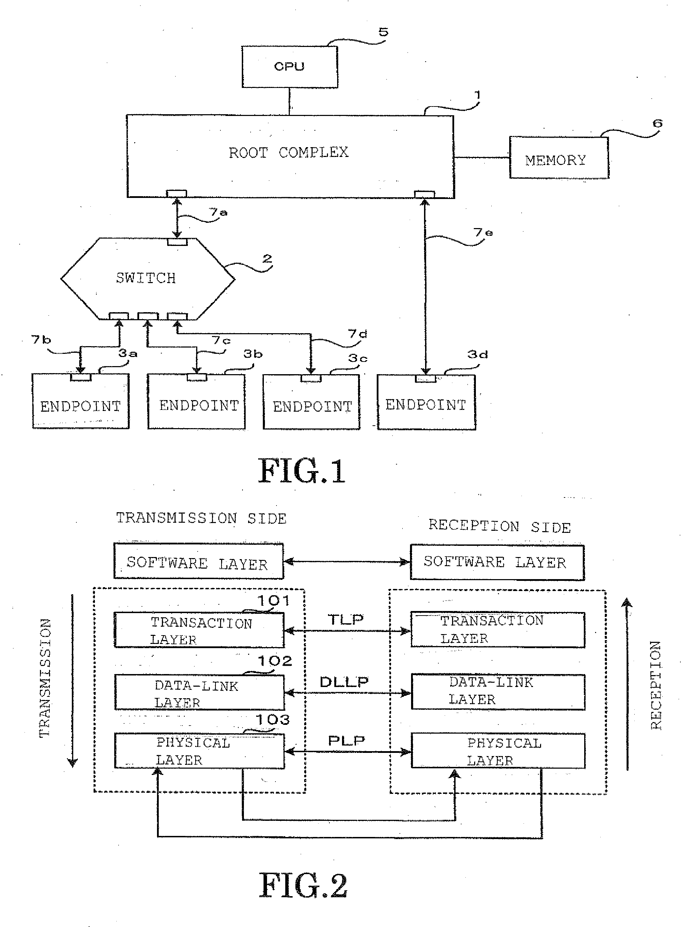

First of all, an outline of such a PCI Express system will be described with reference to Fig. 1 to Fig. 3. As shown for example in Fig. 1, the layout of the PCI Express system comprises the following devices: a root complex 1, a switch 2 and endpoints 3 (3a, 3b, 3c and 3d).

Also, the root complex 1 and switch 2 respectively have a plurality of ports; the PCI Express buses 7a to 7e that effect interconnection of these and the endpoints 3 have a three-layer construction as shown in Fig. 2.

The respective layers comprise: a transaction layer 101 that ensures reliable communication of data in end-to-end fashion with conventional PCI-compatible services with respect to the upper software layer, comprising the uppermost driver and application software; a data-link layer 102 that ensures reliable data communication with adjacent connectors; and a physical layer 103 that exchanges communication packets by a physical medium; the data that is exchanged is transmitted in the form of packets.

In addition, the root complex 1 is respectively connected with a CPU 5 by the system bus and with a memory 6 by a memory bus, located at the uppermost level of the tree structure of the PCI Express system.

In this layout, for communication between the root complex 1 and the endpoint 3a, the switch 2 is the TLP relay device and, for communication between the endpoint 3a and the endpoint 3d, the switch 2 and the root complex 1 are relay devices.

The connection of the transmission route between the devices of a PCI Express system constructed in this way is a point-to-point connection: in the case of a dual simplex system using two differential amplifiers in one direction, the link rate has a bandwidth of 2.5 Gbps; in the case of a bidirectional system, the link rate has a bandwidth of 5 Gbps.

Furthermore, by increasing the number of such bidirectional transmission paths (called lanes) from two to three, the bus bandwidth may be made scalable: data transmission is effected by exchanging packets on these transmission paths.

As shown in Fig. 2a, the packets of each layer are generated by a transaction layer and data link layer: these are respectively termed transaction layer packets (TLP) and data link layer packets (DLLP).

Also, physical layer packets (PLP) are generated in the physical layer for link control purposes.

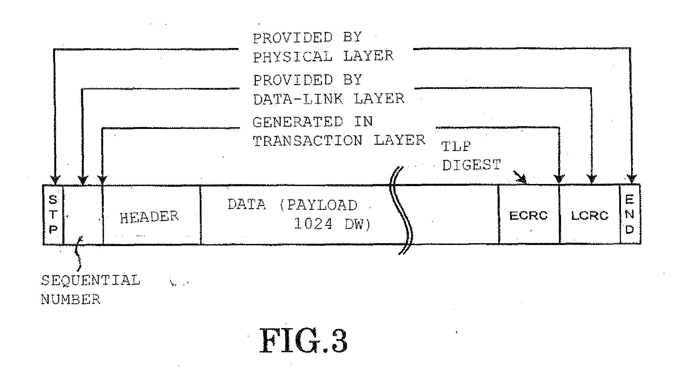

Also, packets of each layer are exchanged with layers connected with the same partner by a link and, as shown in Fig. 3, information is attached thereto, at the leading and trailing end of the packet in the lower protocol layer, before the packet is finally transmitted onto the transmission path. The information at the leading and trailing ends is deleted in each protocol layer of the received packets, before these are transferred to the upper protocol layer.

In more detail, the TLP that are used to perform end-to-end communication are constituted in the transaction layer by a TLP header, data-payload and an optional TLP digest (end-to-end CRC (Cyclic Redundancy Check), called an "ECRC"); when these are transmitted by the data-link layer, a sequential number and LCRC (Link-Level or Link Cyclic Redundancy Check) is added thereto, and this is deleted after inspection on reception.

The DLLP are short packets that exchange information in the case of a bidirectional link, such as TLP delivery response (positive response ACK and negative response NAK).

In addition, control characters (STP and END) are added at both ends of each TLP packet to enable detection of the start and end at the receiving end in the physical layer.

Next, the problem of data integrity (i.e. that there are no errors in the data) in the transaction layer of a PCI Express system constructed in this way will be discussed.

According to the PCI Express standard, LCRC is employed for detection of data errors of transaction layer packets (TLP). The LCRC has the function of a data link layer and is used to detect transmission errors on the link. If the LCRC is abnormal, reliability of communication of TLP by end-to-end communication can be guaranteed by re-transmission between two components connected by a link.

Usually TLP are generated by a terminal device, namely, an endpoint 3 or root complex 1 and transmitted to the final target device through the switch 2 or root complex 1. Since the sequential number added to the TLP is managed for each link, the LCRC is inspected, or a new LCRC is added, every time the TLP passes through a relay device.

Consequently, if reliance for data error detection is placed exclusively on the LCRC function, there is the problem that, if an error is generated in the data of a TLP in a relay circuit (in this case, any circuit that is located above the data-link layer is termed a relay circuit) of the switch or the root complex, since an LCRC including this error is generated normally, this error cannot be detected at the reception destination of the TLP.

In the PCI Express, in order to avoid this problem, an ECRC has been proposed in order to guarantee end-to-end data integrity, as an optional function of the transaction layer. When employing the ECRC function, an ECRC is stored in a 32-bit field called a "TLP digest" at the tail of the TLP.

However, depending on the application of the PCI Express system, rather than employing the TLP digest for the ECRC, it may be extremely useful to utilize this independently (see for example Patent Reference 1).

### [Prior art references]

### [Patent Reference]

**[Patent Reference 1]**
   The specification of published US patent application 2009/0006932

### [Non-patent Reference]

**[Non-patent Reference 1]**
   N Arai, N Satomi, K Tanaka "PCI Express Introduction" Denpa Shinbunsha, published April 1, 2007, chapter 1 to chapter 5.

### [outline of the invention]

### [problem that the invention is intended to solve]

With the existing PCI Express standard, the CRC of a TLP, called an ECRC, is a means for guaranteeing end-to-end data integrity. The TLP digest provided at the tail of the TLP is an optional field and, in accordance with the PCI Express standard, the ECRC is stored therein.

If this TLP digest is omitted or is used for some other purpose, and an error is generated in the switch that relays the TLP or in a relay circuit of the root complex, during communication between the root complex and endpoint via the switch or during communication between endpoints via the switch and root complex, the problem arises that data integrity of the TLP cannot be guaranteed.

The present invention was made in order to solve the above problems, its object being to provide a PCI Express TLP processing circuit and a relay device provided therewith, whereby TLP data integrity can be guaranteed by detecting a data error transmitted from a relay device.

### [Means for solving the problem]

In order to achieve the above object, a PCI Express TLP processing circuit according to the present invention is constructed as follows.
Specifically, the invention provides a PCI Express TLP processing circuit that is provided in a relay device that performs relaying between the root complex of a PCI Express system and an endpoint, or between endpoints, wherein aforementioned TLP processing circuit comprises:
a redundancy code generating circuit that at least adds a redundancy code to each item of transmission data of a received TLP; and
a relay circuit error detection circuit that detects an error in the transmitted TLP in question by comparing aforementioned added redundancy code with the transmitted TLP; whereby data integrity of the TLP transmitted from aforementioned relay device can be guaranteed.

Further in order to achieve the above object, a PCI Express TLP processing circuit according to the present invention is constructed as follows.
Specifically, the invention provides a PCI Express TLP processing circuit that is provided in a relay device that performs relaying between the root complex of a PCI Express system and an endpoint, or between endpoints, wherein aforementioned TLP processing circuit is provided in both directions and, in respect of one direction, comprises:
a plurality of reception processing sections;
a transmission processing section; and
a multiplexer that performs transmission to aforementioned transmission processing section, selecting one of aforementioned reception processing sections; and
aforementioned reception processing section comprises:
   a control character detection circuit that detects a control character of a received TLP and thereby detects that the packet in question is a TLP;
   a redundancy code generating circuit that adds a "redundancy code" for detecting errors in the device in question, to each of predetermined data units, in respect of data of a header of aforementioned TLP (TLP header), data (data-payload) and TLP digest detected by said control character detection circuit;
   an LCRC/sequential number detection circuit that detects the "LCRC" and "sequential number" in respect of aforementioned TLP processed by aforementioned redundancy code generating circuit;
   a buffer writing circuit that stores in correspondence the TLP that is output from aforementioned LCRC/sequential number detection circuit and said redundancy code that has been added;
   a buffer memory for this buffer writing;
   a packet control circuit section that returns to the transmission source device of aforementioned TLP, in the form of an ACK DLLP/NAK DLLP, whether or not an error has been detected in the TLP stored in aforementioned buffer memory, and controls transmission for normal transmission from aforementioned TLP processing circuit to the transmission destination or for nullifying transmission; and
   aforementioned transmission processing section comprises:
      a buffer reading circuit that reads a corresponding TLP from aforementioned buffer memory in accordance with a transmission instruction output from aforementioned packet control circuit;
      a sequential number generating circuit that adds a sequential number to said TLP that has been read by aforementioned buffer reading circuit;
      an LCRC generating circuit that adds an "LCRC" to the output of aforementioned sequential number generating circuit;
      a relay circuit error detection circuit that determines whether or not an error correction is feasible by comparing the output of aforementioned LCRC generating circuit and aforementioned added redundancy code and reports the result to said packet control circuit; and
      a control character addition circuit that, if the instruction from aforementioned packet control circuit section is an instruction to generate a nullified TLP, inverts the LCRC and additionally outputs at the tail of the TLP an "EDB" or, if the instruction from said packet control circuit section is not an instruction to generate a nullified TLP, additionally outputs at the tail of the TLP an "END" character; wherein
      aforementioned packet control circuit section, in aforementioned LCRC/sequential number detection circuit or aforementioned buffer writing circuit, reads the transmission destination from aforementioned TLP header (aforementioned header of the TLP) and, if the packet is not in the course of transmission to aforementioned transmission processing section, communicates a transmission start instruction to the buffer reading circuit and uses aforementioned control character detection circuit to detect "EDB", and, if transmission to the transmission destination from the transmission processing circuit in question has been commenced, instructs aforementioned control character addition circuit to generate a "nullified TLP" nullifying the TLP in question; wherein if the detection output of aforementioned LCRC sequential number detection circuit is normal, this normal status signal is held until the result of aforementioned relay circuit error detection circuit is output, and, if the result of aforementioned relay circuit error detection circuit is normal, an ACK DLLP is returned to the transmission source, but if it is abnormal, a NAK DLLP is returned to the transmission source and an instruction is given to aforementioned control character addition circuit to generate a "nullified TLP" for nullifying aforementioned TLP that is in course of transmission; but
      if the detection output of aforementioned LCRC sequential number detection circuit is abnormal, without waiting for the decision output of aforementioned relay circuit error detection circuit, a NAK DLLP is returned to aforementioned transmission source and, if transmission of the TLP to the transmission destination has been commenced, an instruction is given to aforementioned control character addition circuit to generate a "nullified TLP" for nullifying the TLP that is in course of transmission; whereby, by detecting errors in TLPs that are transmitted from aforementioned relay device, data integrity can be guaranteed even without adding an ECRC to the TLP.

According to the present invention, a PCI Express TLP processing circuit and a relay device provided there with can be provided whereby data integrity can be guaranteed by detecting an error in data transmitted from a relay device.

### [Brief description of the drawings]

Fig. 1 is a layout diagram of a conventional PCI Express system.
Fig. 2 is a view given in explanation of the construction of conventional PCI Express.
Fig. 3 is a view given in explanation of a conventional TLP format.
Fig. 4 is a TLP processing circuit diagram of a relay device according to the present invention.

### [Modes for putting the invention into practice]

An embodiment of the present invention is described below with reference to the drawings.

### [Embodiment]

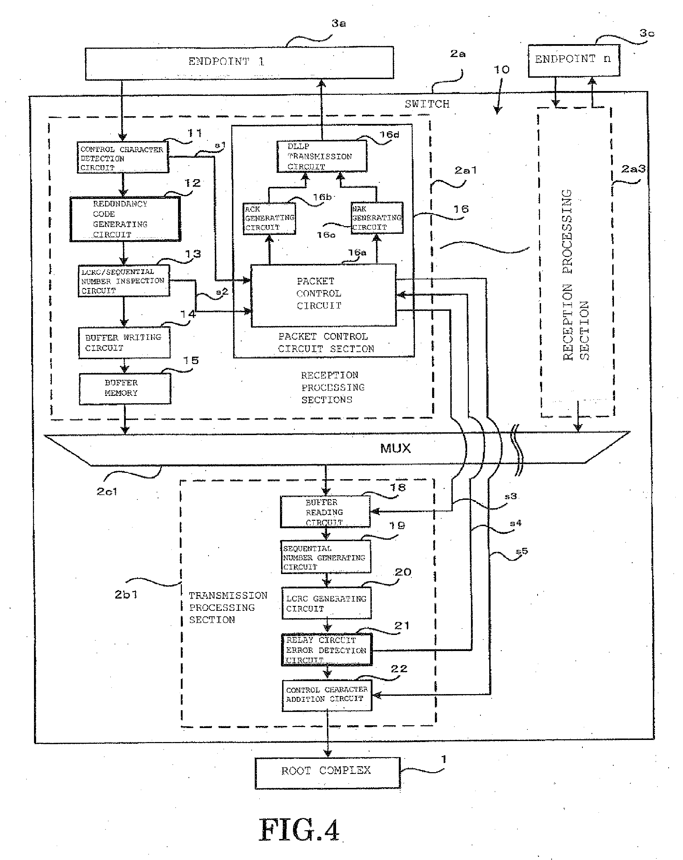

An embodiment of the present invention will now be described with reference to Fig. 4. Fig. 4 is a layout diagram of a TLP processing circuit of data transmitted in an upstream direction to the root complex 1 from endpoints 3a to 3c via a switch 2a constituting a relay device of a PCI Express system according to the present invention. The TLP processing circuit 10 in the downstream direction is the same in construction as that of Fig. 1, so a description thereof is omitted.

A switch 2a is provided between a root complex 1 and a plurality of endpoints 3a to 3c; the path of the root complex 1 and endpoint 3a (or 3b, 3c) is set beforehand by the PCI Express configuration software.

Also, on the link between the root complex 1 and the switch 2a and the link between the switch 2a and the endpoint 3a (or 3b, 3c), delivery confirmation and flow control are separately performed.

This flow control is not the subject of the gist of the present invention, so a description thereof is omitted: the description will now assume that the endpoint 3a and the root complex 1 are connected with the switch 2a of the present invention.

First of all, the construction of the switch 2a will be described. The switch 2a that effects relay between the endpoint 3a of the PCI Express system and the root complex 1 comprises a bidirectional TLP processing circuit 10 between the endpoint 3a and the root complex 1.

The TLP processing circuit 10 comprises: a plurality of reception processing sections 2al to 2a3; a transmission processing section 2bl; and a multiplexer 2c1 that effects transmission to the transmission processing section 2b1, selecting one or other of the reception processing sections 2a1 to 2a3.

The reception processing section 2a1 comprises: a control character detection circuit 11 that performs identification processing as to whether a given packet is a TLP by detecting a control character of the received TLP; a redundancy code generating circuit 12 that detects an error generated by a relay circuit of a relay device for each predetermined data unit, in respect of the TLP header, data-payload and TLP digest data that are output from the control character detection circuit 11, and adds a "redundancy code"; and an LCRC/sequential number inspection circuit 13 that inspects the "LCRC" and "sequential number" in respect of the TLP processed by the redundancy code generating circuit 12.

In addition, the reception processing section 2a1 comprises: a buffer writing circuit 14 that stores, in association, the TLP that is output from the LCRC/sequential number detection circuit 13 and the redundancy code that is added thereto; a buffer memory 15 thereof; and a packet control circuit section 16 that returns to the endpoint 3a, in the form of an ACK DLLP/NAK DLLP (Data-Link Layer Packet), information as to whether or not an error was detected in respect of a TLP stored in the buffer memory 15 and that also controls transmission for performing normal transmission or disabling transmission from the TLP processing circuit 10 to the root complex 1.

Also, the transmission processing section 2b1 comprises: a buffer reading circuit 18 that reads the corresponding TLP from the buffer memory 15 in accordance with a transmission instruction output from the buffer control circuit section 16; a sequential number generating circuit 19 that adds a sequential number to the TLP read by the buffer reading circuit 18; an LCRC generating circuit 20 that adds an "LCRC" to the output of the sequential number generating circuit 19; a relay circuit error detection circuit 21 that identifies the presence of an error generated in the buffer memory 15 by comparing with the redundancy code to which the LCRC output was added and that reports the result to the packet control circuit section 16; and a control character addition circuit 22 that, in accordance with an instruction from the packet control circuit section 16, adds a control character "EDB" (EnD Bad, indicating the end of a nullified TLP) or "END" before delivering output.

In addition, though the details will be omitted, the transmission control section 2b1 is provided with a transmission right arbitrating function of arbitrating return of transmission permission in regard to respective packet control circuit sections 16, on receipt of transmission requests from a plurality of packet control circuit sections 16.

The packet control circuit sections 16 comprise: a packet control circuit 16a that, in respect of a TLP stored in the buffer memory 15, controls the transmission instruction and the response, whether normal or abnormal, of the TLP to the transmission source, based on whether or not there is an error in the received TLP; an ACK DLLP generating circuit 16b that generates an ACK DLLP if the TLP received on the instruction from the packet control circuit 16a is normal and a NAK DLLP generating circuit 16c that generates a NAK DLLP if this is abnormal; and a DLLP transmission circuit 16D that transmits this ACK DLLP or NAK DLLP.

Next, the details of the circuits will be described. The control character detection circuit 11 is a circuit in accordance with the definition specified by the PCI Express Specification, and detects the following characters: "STP", indicating the start of a transaction layer packet (TLP); "END" indicating the end of such a packet; or "EDB" indicating the end of a nullified packet; if "STP" is received, this control character detection circuit recognizes that the received packet is a TLP.

If the control character at the tail of the TLP is not "END", but "EDB", this control character detection circuit 11 reports (s1) to the packet control circuit 16a that the packet in question is a nullified TLP.

Next, the redundancy code generating circuit 12 attaches a "redundancy code" for error detection, usually, at every DW (double word), of the TLP header, data-payload (or sometimes called only data or payload) and TLP digest, in order to guarantee integrity of the TLP data that transmitted from the switch 2a: however, the data units may be any of: every byte, every word, every 2WD, or the entire TLP. Also, the redundancy code may be any of: parity, ECC (error correcting code) or the CRC or SUM (or checksum) in respect of the entire TLP.

The LCRC sequential number inspection circuit 13 reports the inspection result signal (s2) of the LCRC and sequential number of the received TLP to the packet control circuit 16a.

If the transmission processing section 2b1 is in use in transmission of a packet by another endpoint 3b or endpoint 3c, the buffer memory 15 temporarily holds the TLP that is being relayed/processed: also, this buffer could be used as a retry buffer.

Next, based on the transmission start signal (s3) from the packet control circuit 16a, the buffer read circuit 18 of the transmission processing section 2b1 reads the TLP from the buffer memory 15 and commences transmission, addressed to the root complex 1.

Also, the relay circuit error detection circuit 21 compares the TLP header, data-payload and TLP digest with the redundancy code added in the redundancy code generating circuit 12: in each case, if the error is recoverable, it reports the result, whether normal or abnormal, to the packet control circuit 16a in the form of an error detection signal (s4) in the switch 2a: this signal is "normal" if the error is recoverable and "abnormal" if the error is irrecoverable.

Next, the operation of the TLP processing circuit 10 constructed in this way will be described. The packet control circuit 16a, in the LCRC/sequential number detection circuit 13 or buffer writing circuit 14, reads the destination from the TLP header: if no other packet is in course of transmission from the switch 2a, the packet control circuit sends a transmission start signal (s3) to the buffer reading circuit 18; if the control character detection circuit 11 has detected EDB (s1), if transmission of a TLP is in fact taking place to the transmission destination from the transmission processing section 2b, it instructs (s5) the control character adding circuit 22 to generate "nullified TLP", nullifying the TLP in question; if a TLP is stored in the buffer memory 15, it discards this TLP.

Then, if the output (s2) of the LCRC sequential signal detection circuit 13 is normal, it holds the normal status signal until the result of the relay circuit error detection circuit 21 is output. If the signal (s4) that is transmitted from the relay circuit error detection circuit 21 is normal, it returns an ACK DLLP to the endpoint 3a; otherwise, it returns a NAK DLLP; also, it instructs the control character addition circuit 22 to output "nullified TLP" to nullify the TLP that is in the course of transmission.

On the other hand, if the output (s2) of the LCRC sequential number detection circuit 13 is abnormal, it immediately returns a NAK DLLP to the endpoint 3a without waiting for output of the result by the relay circuit error detection circuit 21, and, if transmission of this TLP addressed to the root complex 1 has been commenced, it gives instructions for output of "nullified TLP" to the control character addition circuit 22 to nullify this TLP that is in the course of transmission: if the TLP is in storage in the buffer memory 15, it discards this TLP.

Consequently, with a PCI Express system provided with a relay device according to the present invention, even if no ECRC is added to the TLP by the terminal endpoint 3a to 3c or root complex 1, data integrity can still be guaranteed: as a result, the beneficial effect is obtained that system redundancy can be achieved and the TLP digest can easily be utilized in accordance with an independent specification.

The present invention is not restricted in any way to the embodiments described above and could be put into practice in various modified ways without departing from the gist of the invention, so long as, in a PCI Express TLP processing circuit, there are added a redundancy circuit that generates and adds a "redundancy code" to a received TLP and an error detection circuit that inspects for data integrity in a relay device by comparing the "redundancy code" added by the redundancy circuit in respect of a transmitted TLP: furthermore, so long as the control of the exchanged packets is in accordance with the PCI Express specification, the data units inspected can be modified in various ways.

### [Field of industrial application]

The present invention is utilized in processing circuitry of a PCI Express device, in particular processing circuitry for transaction layer packets.

### [Explanation of the reference symbols]

- 1: root complex
- 2, 2a: switches
- 2a1 to 2a3: reception processing sections
- 2b1: transmission processing section
- 2c1: MUX (multiplexer)
- 3, 3a, 3b, 3c, 3d: endpoints
- 5: CPU
- 6: memory
- 7a to 7e: PCI Express bus
- 10: TLP processing circuit
- 11: control character detection circuit
- 12: redundancy code generating circuit
- 13: LCRC/sequential number inspection circuit
- 14: buffer writing circuit
- 15: buffer memory
- 16: packet control circuit section
- 16a: packet control circuit
- 16b: ACK generating circuit
- 16c: NAK generating circuit
- 16d: DLLP transmission circuit
- 17: MUX (multiplexer)
- 18: buffer reading circuit
- 19: sequential number generating circuit
- 20: LCRC generating circuit
- 21: relay circuit error detection circuit
- 22: control character addition circuit

## Claims

1. A PCI Express TLP processing circuit that is provided in a relay device that performs relaying between a root complex of a PCI Express system and an endpoint, or between endpoints, wherein said TLP processing circuit comprises:
a redundancy code generating circuit that at least adds a redundancy code to each item of transmission data of a received TLP; and
a relay circuit error detection circuit that detects an error in a transmitted TLP in question by comparing said added redundancy code with a transmitted TLP,
whereby data integrity of said TLP transmitted from said relay device can be guaranteed.

2. A relay device provided with said PCI Express TLP processing circuit according to claim 1.

3. A PCI Express TLP processing circuit that is provided in a relay device that performs relaying between a root complex of a PCI Express system and an endpoint, or between endpoints, wherein said TLP processing circuit is provided in both directions and, in respect of one direction, comprises:
(1) a plurality of reception processing sections;
(2) a transmission processing section; and
(3) a multiplexer that performs transmission to said transmission processing section, selecting one of said reception processing sections,
said reception processing section comprises:
(a) a control character detection circuit that detects a control character of a received TLP and thereby detects that a packet in question is a TLP;
(b) a redundancy code generating circuit that adds a "redundancy code" for detecting errors in said device in question, to each of predetermined data units, in respect of data of header of said TLP, data and TLP digest detected by said control character detection circuit;
(c) an LCRC/sequential number detection circuit that detects a "LCRC" and "sequential number" in respect of said TLP processed by said redundancy code generating circuit;
(d) a buffer writing circuit that stores in correspondence said TLP that is output from said LCRC/sequential number detection circuit and said redundancy code that has been added;
(e) a buffer memory for said buffer writing circuit;
(f) a packet control circuit section that returns to a transmission source device of said TLP, in a form of an ACK DLLP/NAK DLLP, whether or not an error has been detected in said TLP stored in said buffer memory, and controls transmission for normal transmission from said TLP processing circuit to a transmission destination or for nullifying transmission; and
said transmission processing section comprises:
(g) a buffer reading circuit that reads a corresponding TLP from said buffer memory in accordance with a transmission instruction output from said packet control circuit;
(h) a sequential number generating circuit that adds a sequential number to said TLP that has been read by said buffer reading circuit;
(i) an LCRC generating circuit that adds an "LCRC" to an output of said sequential number generating circuit;
(j) a relay circuit error detection circuit that determines whether or not an error correction is feasible by comparing an output of said LCRC generating circuit and said added redundancy code and reports a result to said packet control circuit; and
(k) a control character addition circuit that, if the instruction from said packet control circuit section is an instruction to generate a nullified TLP, inverts said LCRC and additionally outputs at a tail of said TLP an "EDB" or, if said instruction from said packet control circuit section is not an instruction to generate a nullified TLP, additionally outputs at said tail of said TLP an "END" character,
wherein said packet control circuit section, in said LCRC/sequential number detection circuit or said buffer writing circuit, reads a transmission destination from said TLP header and, if said packet is not in a course of transmission to said transmission processing section, communicates a transmission start instruction to said buffer reading circuit and uses said control character detection circuit to detect "EDB", and, if transmission to a transmission destination from said transmission processing circuit in question has been commenced, instructs said control character addition circuit to generate a "nullified TLP" nullifying said TLP in question,
wherein if a detection output of said LCRC sequential number detection circuit is normal status signal, said normal status signal is held until a result of said relay circuit error detection circuit is output, and,
if said result of said relay circuit error detection circuit is normal, an ACK DLLP is returned to a transmission source, but if said result of said relay circuit error detection circuit is abnormal, a NAK DLLP is returned to said transmission source and an instruction is given to said control character addition circuit to generate a "nullified TLP" for nullifying said TLP that is in course of transmission,
however, if the detection output of said LCRC sequential number detection circuit is abnormal, without waiting for a decision output of said relay circuit error detection circuit, a NAK DLLP is returned to said transmission source and, if transmission of said TLP to said transmission destination has been commenced, an instruction is given to said control character addition circuit to generate a "nullified TLP" for nullifying said TLP that is in course of transmission, whereby, by detecting errors in TLPs that are transmitted from said relay device, data integrity can be guaranteed even without adding an ECRC to said TLP.

4. A relay device comprising said PCI Express TLP processing circuit according to claim 3.
